# EUROPÄISCHE PATENTSCHRIFT

(11) **EP 3 856 613 B1**
(45) Veröffentlichungstag und Bekanntmachung des Hinweises auf die Patenterteilung: **19.04.2023**
(21) Anmeldenummer: 19773396.7
(22) Anmeldetag: 19.09.2019
(51) Int. Cl.: F16H 25/22, F16H 25/24, B62D 3/12, B62D 5/04

(54) **STEER-BY-WIRE-LENKGETRIEBE MIT DRUCKSTÜCK GELAGERTER KOPPELSTANGE**
STEER-BY-WIRE STEERING GEAR WITH COUPLING ROD SUPPORTED ON A PRESSURE PIECE
MÉCANISME DE DIRECTION À COMMANDE PAR CÂBLE ÉLECTRIQUE À BARRE D'ACCOUPLEMENT MONTÉE AU MOYEN D'UNE PIÈCE DE POUSSÉE

(30) Priorität: 24.09.2018 DE 102018123424
(43) Veröffentlichungstag der Anmeldung: 04.08.2021
(73) Patentinhaber: thyssenkrupp Presta AG, 9492 Eschen (LI); thyssenkrupp AG, 45143 Essen (DE)
(72) Erfinder: GOEBEL, Tobias, 6850 Dornbirn (AT); KREUTZ, Daniel, 6800 Feldkirch (AT); MARTE, Bernhard, 6833 Klaus (AT)
(74) Vertreter: thyssenkrupp Intellectual Property GmbH
(86) Internationale Anmeldenummer: PCT/EP2019/075128
(87) Internationale Veröffentlichungsnummer: WO 2020/064491

(56) Entgegenhaltungen:
- EP-A1- 3 159 244
- DE-A1-102006 008 269
- DE-A1-102017 103 975

## Beschreibung

Die vorliegende Erfindung betrifft ein Lenkgetriebe für ein Steer-by-Wire-Lenksystem eines Kraftfahrzeuges mit den Merkmalen des Oberbegriffs des Anspruchs 1 und ein Steer-by-Wire-Lenksystem mit den Merkmalen des Oberbegriffs des Anspruchs 13.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Ein Steer-by-Wire-Lenksystem ist beispielsweise in der EP 3 159 244 A1 offenbart. In elektromechanischen Lenkgetrieben ist eine Verdrehsicherung und Lagerung der Koppelstange durch das Zusammenspiel eines Zahnstangenlenkgetriebes mit einem Druckstück, das die Zahnstange an ein Ritzel drückt, gegeben.

Aus der Offenlegungsschrift DE 10 2008 043 116 A1 ist ein Zahnstangenlenkgetriebe bekannt, bei welchem eine Zahnstange mit einem Ritzel in Eingriff steht, wobei ein Druckstück unter Vorspannung die Zahnstange gegen das Ritzel drückt. Zur Einstellung der Federvorspannung wird das Drückstückspiel über eine Stellschraube eingestellt. Die Offenlegungsschrift DE 10 2012 019 654 A1 offenbart ein Zahnstangenlenkgetriebe mit einer Lagerbuchse, welche die Zahnstange umfangsseitig umgibt und im Verzahnungsbereich angeordnet ist. Innerhalb der Lagerschale ist eine Gleitschale vorgesehen, auf welcher die Zahnstange abgestützt ist. Die Vorspannung der Lagerschale erfolgt über eine Stellschraube. Weiter offenbart die De 10 2006 008 269 A1 den Oberbegriff des unabhängigen Anspruchs, und zeigt eine Zahnstangenlenkvorrichtung mit einer bekannten Zahnstangen-Druckstückanordnung, wobei das Druckstück an entgegengesetzten Bereichen abgeschrägte Lagerflächen aufweist.

Durch den Entfall des Zahnstangenlenkgetriebes in Steer-by-Wire-Lenkungen muss eine neue Lösung für eine Lagerung und eine Verdrehsicherung der Koppelstange entwickelt werden. Dabei ist aus der DE 10 2017 103 975 A1 ein für eine Steer-by-Wire-Lenkung geeignetes Lenksystem bekannt, wobei eine Verdrehsicherung durch einen zwischen der Zahnstange und dem Zahnstangengehäuse des Lenksystems eingreifend ausgebildeten Wälzkörper realisiert ist.

Es ist daher Aufgabe der vorliegenden Erfindung, ein Lenkgetriebe für ein Steer-by-Wire-Lenksystem eines Kraftfahrzeuges anzugeben, das eine verbesserte Lagerung und Verdrehsicherung einer Koppelstange aufweist und zudem einfach zu montieren ist.

Diese Aufgabe wird von einem Lenkgetriebe für ein Steer-by-Wire-Lenksystem eines Kraftfahrzeuges mit den Merkmalen des Anspruchs 1 und einem Steer-by-Wire-Lenksystem mit den Merkmalen des Anspruchs 13 gelöst. In den Unteransprüchen sind vorteilhafte Weiterbildungen der Erfindung genannt. Demnach ist ein Lenkgetriebe für ein Steer-by-Wire-Lenksystem eines Kraftfahrzeuges aufweisend eine in einem Lenkgetriebegehäuse gelagerte Koppelstange, wobei die Koppelstange entlang der Längsachse verschiebbar ist, und wobei die Koppelstange in dem Lenkgetriebegehäuse mittels eines Druckstücks verschiebbar entlang einer Längsachse gelagert ist, wobei das Druckstück zwei Lagerelemente aufweist, die auf gegenüberliegenden Seiten diametral zur Koppelstange in Umfangsrichtung der Längsachse angeordnet sind, bevorzugt diametral zur Koppelstange. Die beiden Lagerelemente stellen eine einfache Lagerung der Koppelstange dar. Vorzugsweise ist auf der Koppelstange eine Gewindespindel ausgebildet, die von einer Spindelmutter umgeben ist, welche Teil eines Schraubradgetriebes sind. Die Koppelstange weist bevorzugt keine Verzahnung auf. Sie hat vorzugsweise mindestens zwei Gleitflächen, welche auf Gegengleitflächen im Druckstück aufliegen. Die Koppelstange kann entsprechend auch als Zahnstange ausgebildet sein.

Vorzugweise ist wenigstens eines der beiden Lagerelemente an eine unrunde Profilform der Koppelstange angepasst, sodass das Druckstück eine Verdrehsicherung ausbildet. Vorzugsweise ist eines der beiden Lagerelemente auf beiden Stirnseiten eben oder geradflächig ausgebildet, sodass ein gerader Zylinder gebildet wird. Die Lagerelemente sind somit so ausgeführt, dass die Koppelstange in Rotation formschlüssig gehalten wird und axial verschiebbar ist. Erfindungsgemäß weist wenigstens eines der Lagerelemente ein Gleitelement auf der Kontaktfläche zwischen dem Lagerelement und der Koppelstange auf. Bevorzugt weisen beide Lagerelemente ein Gleitelement auf. Es kann vorgesehen sein, dass das Gleitelement das Lagerelement vollumfänglich, vorzugweise als Hülse, umgibt oder sich nur über die Kontaktfläche erstreckt, welche einen geringeren Reibwert aufweist als das Lagerelement. Das Gleitelement ist vorzugsweise als Einlegefolie, die als dünne, reibungsvermindernde Schicht auf der Kontaktfläche aufsitzt. Sie besteht aus einer PTFE-beschichteten Gleitbronze. Die Anordnung des Gleitelements kann insbesondere bei nicht rotationssymmetrischen über einen Verdrehschutz vorgegeben sein. Bevorzugt ist die Kontaktfläche zwischen einem der Lagerelemente und der Koppelstange planar ausgeführt. Das Gleitelement ist vorzugsweise an einer der Stirnseite des Lagerelements, welche der Koppelstange zugewandt ist, derart angeordnet, dass es das Lagerelement nicht überragt. Das Gleitelement ist bevorzugt als dünne, reibungsvermindernde Schicht auf der Kontaktfläche ausgebildet oder sitzt weiter bevorzugt als Einlegefolie im Lagerelement auf.

Vorzugweise weist das Gleitelement Schmiertaschen für Schmieröl auf.

In einer bevorzugten Ausführungsform ist das Gleitelement über eine Steckverbindung formschlüssig, weiter bevorzugt kraftschlüssig, mit dem entsprechenden Lagerelement verbunden. Dazu weist das Gleitelement auf der dem Lagerelement zugewandten Seite einen Dorn oder eine sonstige, hervorragende Struktur auf, die in eine entsprechende Bohrung des Lagerelements eingepresst sein kann.

Vorteilhafterweise umfasst das Lenkgetriebe eine Stelleinrichtung, die in Anlage mit einem Lagerelement des Druckstücks steht, wobei das Lagerelement mittels der Stelleinrichtung in radialer Richtung auf die Koppelstange bewegbar ist und die Stelleinrichtung das Lagerelement vorspannt. Hierdurch kann das Spiel der Gleitschiebe-Lagerung eingestellt werden.

Vorzugsweise weist das Lenkgetriebegehäuse zur Aufnahme des Druckstücks einen sich in Radialrichtung erstreckenden Dom und fluchtend mit dem Dom eine auf einer dem Dom gegenüberliegenden Innenseite Ausnehmung auf, wobei ein erstes Lagerelement des Druckstücks in der Ausnehmung sitzt und ein zweites Lagerelement des Druckstücks in dem Dom, genauer in einer domartigen Öffnung, aufgenommen ist. Das erste Lagerelement kann durch den Dom im Getriebegehäuse montiert werden. Dadurch kann das Gehäuse stark vereinfacht werden. Die Montage des zweiten Lagerelementes erfolgt analog der bereits aus elektromechanischen Lenkungen bekannten Montage eines herkömmlichen einseitigen Druckstücks. Die Ausnehmung ist vorzugsweise als Sackloch ausgebildet. Es ist weiterhin denkbar und möglich, dass das zweite Lagerelement in einer durchgehenden Öffnung ausgebildet ist, wobei das zweite Lagerelement analog zum ersten Lagerelement mittels einer Stelleinrichtung in Richtung der Koppelstange hinbewegt werden kann.

Vorzugsweise sind das erste und das zweite Lagerelement im Wesentlichen kreiszylindrisch.

Es ist vorteilhafterweise vorgesehen, dass eine Gewindespindel eines Schraubgetriebes auf einem ersten Endbereich der Koppelstange ausgebildet ist und in einem, dem ersten Endbereich entlang der Längsachse gegenüberliegenden zweiten Endbereich die Koppelstange mittels des Druckstücks in dem Lenkgetriebegehäuse verschieblich gelagert ist.

Vorzugsweise ist das Profil der Koppelstange in dem zweiten Endbereich unrund und der Durchmesser des Profils in diesem Bereich kleiner als der Durchmesser des Profils der Koppelstange im übrigen Bereich. Der Begriff "unrund" bedeutet bei dieser Definition, dass die Grundflächen keine Kreise sind. Die Koppelstange im zweiten Endbereich, in welchem das Druckstück angeordnet ist, kann als regelmäßiges oder unregelmässiges Vieleck bzw. als Polygon oder als Polygonprofile ausgebildet sein.

In einer vorteilhaften Ausführungsform ist eines der Lagerelemente auf der koppelstangenahen Seite im Wesentlichen V-förmig korrespondierend zum Profil der Koppelstange ausgebildet und bildet somit die Verdrehsicherung aus.

Bevorzugt ist das Schraubgetriebe ein Kugelgewindetrieb.

Weiterhin ist ein Steer-by-Wire-Lenksystem für ein Kraftfahrzeug umfassend:
- ein auf die gelenkten Räder wirkendes Lenkgetriebe,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit übermittelt,
vorgesehen, wobei die Ansteuereinheit das Lenkgetriebe ansteuert, um den Fahrerwunsch in eine Auslenkung der gelenkten Räder zu transformieren und wobei das Lenkgetriebe, wie zuvor beschrieben, ausgebildet ist. Dabei ist es vorteilhaft, wenn die Koppelstange zur Lenkung der Räder des Kraftfahrzeuges mit Spurstangen verbunden ist.

Obwohl die erfindungsgemäße Lösung bevorzugt in einem Steer-by-Wire Lenksystem eingesetzt wird, ist es denkbar und möglich, dass diese in einer elektromechanischen Lenkvorrichtung implementiert werden kann.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine schematische Darstellung eines Steer-by-Wire-Lenksystems,
- Figur 2:: einen Längsschnitt durch ein Lenkgetriebe mit Koppelstange und Kugelgewindetrieb,
- Figur 3:: eine Explosionszeichnung eines Druckstücks zur Lagerung der Koppelstange,
- Figur 4:: einen Längsschnitt durch das Druckstück,
- Figur 5:: eine räumliche Ansicht eines ersten Lagerelementes des Druckstücks, sowie
- Figur 6:: eine räumliche Ansicht eines zweiten Lagerelementes des Druckstücks.

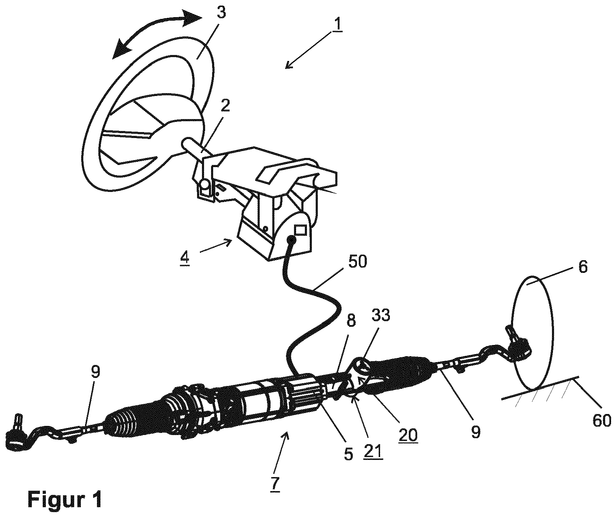

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 60 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 an eine nicht dargestellte Feedback-Aktuator-Monitoreinheit übertragen. Die Feedback-Aktuator-Monitoreinheit überträgt den Fahrerlenkwunsch an eine Ansteuereinheit. Die Feedback-Aktuator-Monitoreinheit übernimmt bevorzugt auch die Ansteuerung des Feedback-Aktuators 4. Die Feedback-Aktuator-Monitoreinheit kann auch integral mit der Ansteuereinheit ausgebildet sein. Die Ansteuereinheit steuert in Abhängigkeit von dem Signal des Drehwinkelsensors sowie weiteren Eingangsgrößen einen elektrischen Lenkaktuator 5 an, welcher die Stellung der gelenkten Räder 6 steuert. Der Lenkaktuator 5 ist Teil eines Lenkgetriebes 7 aufweisend eine in einem Lenkgetriebegehäuse 8 verschieblich gelagerte Koppelstange. Die Koppelstange wirkt über Spurstangen 8 und anderen Bauteilen mittelbar auf die gelenkten Räder 6.

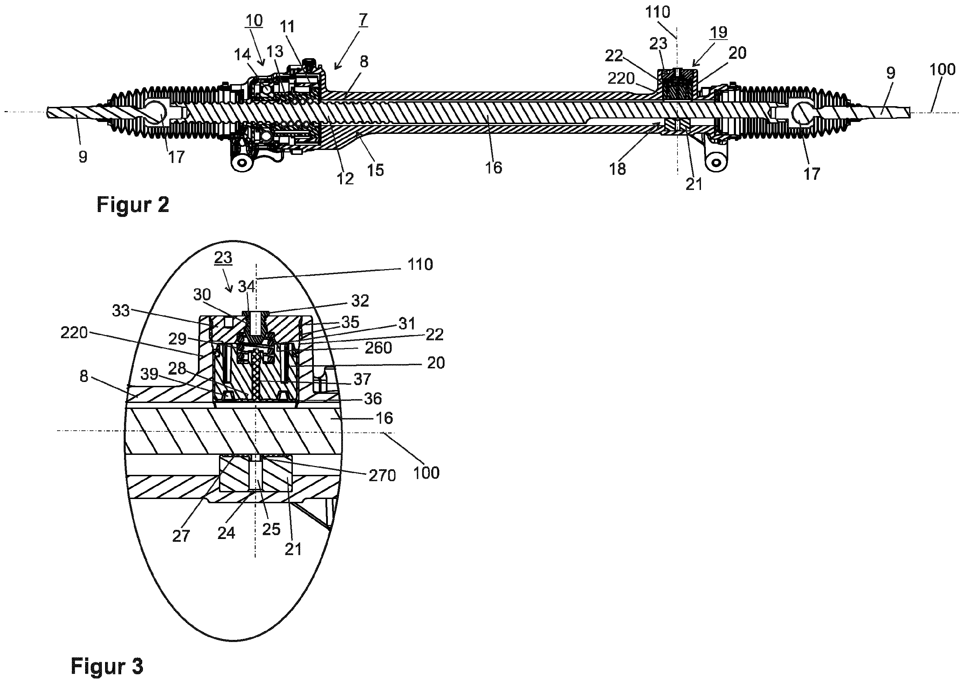

Figur 2 zeigt einen Längsschnitt durch ein erfindungsgemäßes Lenkgetriebe 7 mit einem antreibbaren Kugelgewindetrieb 10. Eine Kugelmutter 11 ist koaxial zur Längsachse 100 angeordnet und wird von einer Kugelgewindespindel 12 koaxial zur Längsachse 100 durchsetzt. Ein Drehmoment kann von der Kugelmutter 11 über Kugeln 13 zur Kugelgewindespindel 12 übertragen werden. Die Kugelmutter 11 ist mittels eines Kugellagers 14 in dem Lenkgetriebegehäuse 8 drehbar gelagert. Eine Drehbewegung der Kugelmutter 11 wird in eine translatorische Bewegung der Kugelgewindespindel 12 entlang der Längsachse 100 überführt.

Die Kugelgewindespindel 12 ist auf einem ersten Endbereich 15 einer Koppelstange 16 ausgebildet, die an ihren Enden jeweils mit einer Spurstange 9 mittels eines Kugelgelenks 17 verbunden ist. Die Koppelstange 16 ist in einem, dem ersten Endbereich entlang der Längsachse 100 gegenüberliegenden zweiten Endbereich 18 mittels eines Druckstücks 19 in dem Lenkgetriebegehäuse 8 verschieblich gelagert. Das Druckstück 19 weist zwei Lagerelemente 20,21 auf, die in Umfangsrichtung der Längsachse 100 auf gegenüberliegenden Seiten, diametral zur Koppelstange 16 angeordnet sind. In dem zweiten Endbereich 18 weist die Koppelstange 16 im Querschnitt ein unrundes Profil auf, das im Zusammenspiel mit dem Druckstück 19 eine Verdrehsicherung ausbildet. Das Lenkgetriebegehäuse 8 weist eine domartige Öffnung 22 zur Aufnahme des Druckstücks 19 auf. Ein Lagerelement 20 des Druckstücks 19 wird mittels einer Stelleinrichtung 23 in Richtung der gestrichelten Längsachse 110 auf die Koppelstange 16 hin bewegt.

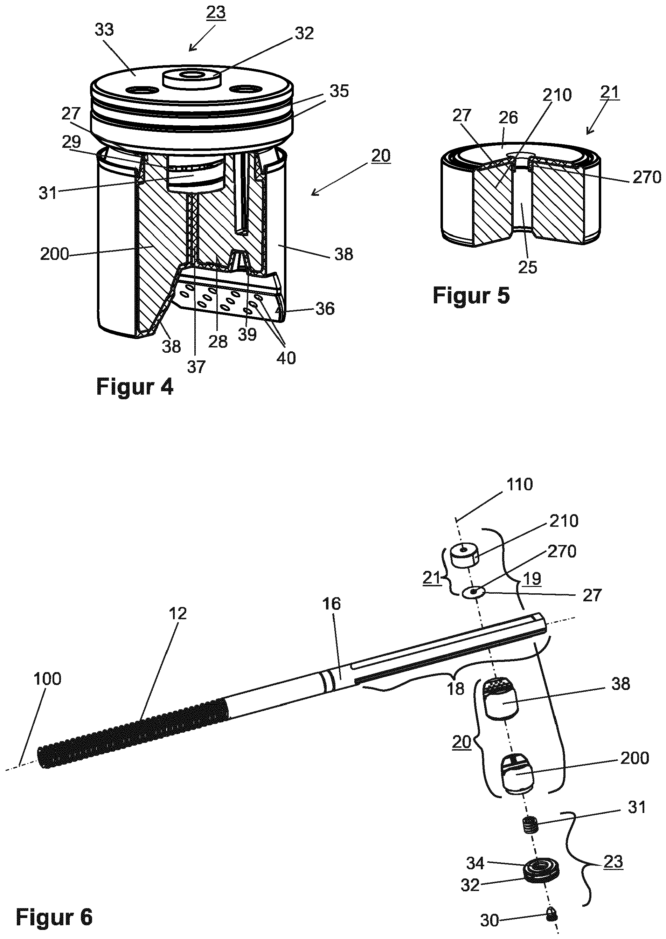

Das im Lenkgetriebegehäuse 8 angeordnete Druckstück 19 mit Stelleinrichtung 23 ist im Detail in Figur 3 dargestellt. Fluchtend mit dem Dom 220 weist das Gehäuse 8 auf einer dem Dom 220 gegenüberliegenden Innenseite eine Ausnehmung 24 zur Aufnahme eines ersten Lagerelementes 21 auf. Das erste Lagerelement 21 ist, wie in Figur 5 im Detail dargestellt, zylindrisch ausgeformt. Es weist eine mittig durchsetzende Bohrung 25 auf. Das erste Lagerelement 21 ist auf seinen Stirnseiten eben oder geradflächig ausgebildet. Die Kontaktfläche 26 zwischen dem ersten Lagerelement 21 und der Koppelstange 16 ist planar ausgeführt. Das erste Lagerelement 21 beschreibt im Wesentlichen einen geraden Zylinder, wobei eine der Stirnseiten an der Koppelstange 16 anliegt. Die Stirnseite, welche an der Koppelstange 16 anliegt, weist außen einen kreisrunden Steg auf. Die Koppelstange 16 ist in dem in Anlage mit dem ersten Lagerelement 21 stehenden Bereich korrespondierend zu dem ersten Lagerelement 21 ausgebildet. Es ist ein Gleitelement 27 vorgesehen, dass über eine Steckverbindung formschlüssig mit dem ersten Lagerelement 21 verbunden ist. Dazu weist das Gleitelement 27 auf der dem Lagerelement zugewandten Seite einen Dorn 270 oder eine sonstige, hervorragende Struktur auf, die in die Bohrung 25 des ersten Lagerelements eingepresst ist. Das Gleitelement 27 streckt sich über einen Großteil der Kontaktfläche 26 und ist in diesem Fall nur auf der Kontaktfläche 26, zwischen erstem Lagerelement 21 und Koppelstange 16 ausgebildet. Das Gleitelement 27 überragt bevorzugt nicht den Steg ersten Lagerelements 21. Der Grundkörper des Lagerelements 21 ist als Blechelement ausgebildet, auf welchem auf der Kontaktfläche 26 das Gleitelement 27 angeordnet ist, welches einen geringeren Reibwert aufweist als der Grundkörper. Das Gleitelement 27 ist in der gezeigten Ausführungsform eine Einlegefolie, die als dünne, reibungsvermindernde Schicht auf der Kontaktfläche 26 aufsitzt. Sie besteht aus einer PTFE-beschichteten Gleitbronze. Die Anordnung des Gleitelements 27 kann über einen nicht dargestellten Verdrehschutz vorgegeben sein.

Der Durchmesser des Profils der Koppelstange 16 ist in dem zweiten Endbereich 18 kleiner als der Durchmesser der Koppelstange 16 im übrigen Bereich. Die Koppelstange 16 ist verschlankt, damit das erste Lagerelement des Druckstücks 21 Platz im Lenkgetriebegehäuse 8 findet und das unrunde Profil der Koppelstange 16 ausgebildet werden kann.

Das zweite Lagerelement 20 des Druckstücks 19 weist ebenfalls eine zylindrische Grundform und damit einen kreisförmigen Querschnitt auf. Es ist im Detail in Figur 4 dargestellt.

In bekannter Art und Weise weist das zweite Lagerelement 20 auf einer ersten, koppelstangefernen Stirnseite 260, welche einer zweiten Stirnseite 28 gegenüberliegt, eine Vertiefung 29 aufweisend ein dornartiges Element 30 auf. Diese dienen dem Sitz einer Schraubenfeder 31, die Teil der Stelleinrichtung 23 ist. Die Stelleinrichtung 23 umfasst weiterhin eine Stellschraube 32 und ein Stellelement 33. Das Stellelement 33 liegt in Anlage mit dem zweiten Lagerelement 20 auf der ersten Stirnseite 260. Das Stellelement 33 weist eine durchsetzende Gewindebohrung 34 auf, in die die Stellschraube 32 von außen in Richtung auf die Koppelstange 16 bewegend eingeschraubt werden kann. Die Stellschraube 32 drückt gegen die in das Stellelement 33 ragende Schraubenfeder 31, so dass mittels der Stelleinrichtung 23 der Druck zwischen Druckstück und Koppelstange 16 in der Neutralstellung voreingestellt bzw. nachgestellt werden kann. Das Stellelement 33 weist in Längsrichtung in einem oberen bis mittleren Bereich zwei umlaufende Vertiefungen 35 zur Aufnahme von ringförmigen Dämpfungselementen (hier: ein O-ring) auf. Diese Dämpfungselemente dienen neben der Dämpfung der Bewegung auch der Minimierung des radialen Spiels.

Das zweite Lagerelement 20 weist auf seiner zweiten, koppelstangenahen Seite 28 eine Kontaktfläche 36 auf, die dem unrunden Profil der Koppelstange 16 im zweiten Endbereich 18 angepasst ist. In eine mittig durchsetzende Bohrung 37 ist ein Gleitelement 38 eingepresst. Das Gleitelement 38 überdeckt die Kontaktfläche 36 vollständig und umschließt das zweite Lagerelement 20 auch im Bereich der Mantelfläche. Das Gleitelement 38 ist im Bereich der zweiten Seite 28 des zweiten Lagerelements 20 in einer zur Bohrung 37 beabstandeten Vertiefung 39 zur Ausbildung einer Verdrehsicherung eingepresst. Das Gleitelement 38 weist Schmiertaschen 40 zur Aufnahme von Schmieröl auf.

Figur 6 zeigt die einzelnen Komponenten des Druckstücks 19 und der Stelleinrichtung 23 in einer Explosionszeichnung. Die beiden Lagerelemente 20,21 sind an die Profilform der Koppelstange 16 angepasst. Das zweite Lagerelement 20 ist auf der koppelstangenahen Seite im Wesentlichen V-förmig ausgebildet. Es sind auch andere Formen denkbar, die eine Formschlussgeometrie ermöglichen und gegen Rotation sichern. Die Koppelstange 16 liegt im zweiten Endbereich 18, der sich über den gesamten Verstellweg der Koppelstange relativ zum Druckstück 19 erstreckt, ausschließlich auf den beiden Gleitflächen, der sich gegenüberliegenden Gleitelemente 26,38 auf. Sie ist verschieblich entlang der Längsachse 100 gelagert.

## Patentansprüche

1. Lenkgetriebe (7) für ein Steer-by-Wire-Lenksystem (1) eines Kraftfahrzeuges aufweisend eine in einem Lenkgetriebegehäuse (8) gelagerte Koppelstange, wobei die Koppelstange (16) entlang der Längsachse (100) verschiebbar ist, wobei die Koppelstange (16) in dem Lenkgetriebegehäuse (8) mittels eines Druckstücks (19) verschiebbar entlang einer Längsachse (100) gelagert ist, **dadurch gekennzeichnet, dass** das Druckstück (19) zwei Lagerelemente (20,21) aufweist, die auf gegenüberliegenden Seiten diametral zur Koppelstange (16) in Umfangsrichtung der Längsachse (100) angeordnet sind, und wobei wenigstens eines der Lagerelemente (20,21) ein Gleitelement (27,38) auf der Kontaktfläche (26,36) zwischen dem Lagerelement (20,21) und der Koppelstange (16) aufweist.

2. Lenkgetriebe nach Anspruch 1, **dadurch gekennzeichnet, dass** wenigstens eines der beiden Lagerelemente (20,21) an eine unrunde Profilform der Koppelstange (16) angepasst ist, sodass das Druckstück (19) eine Verdrehsicherung ausbildet.

3. Lenkgetriebe nach Anspruch 1 oder Anspruch 2, **dadurch gekennzeichnet, dass** das Gleitelement (27,38) das Lagerelement (20,21) vollumfänglich umgibt.

4. Lenkgetriebe nach einem der vorhergehenden Ansprüche, **dadurch gekennzeichnet, dass** das Gleitelement (27,38) Schmiertaschen (40) für Schmieröl aufweist.

5. Lenkgetriebe nach einem der vorhergehenden Ansprüche, **dadurch gekennzeichnet, dass** das Gleitelement (27,38) über eine Steckverbindung formschlüssig mit dem Lagerelement (20,21) verbunden ist.

6. Lenkgetriebe nach einem der vorhergehenden Ansprüche, **dadurch gekennzeichnet, dass** das Lenkgetriebe eine Stelleinrichtung (23) umfasst, die in Anlage mit einem Lagerelement (20) des Druckstücks (19) steht, wobei das Lagerelement (20,21) mittels der Stelleinrichtung (23) in radialer Richtung (110) auf die Koppelstange (16) bewegbar ist und die Stelleinrichtung (23) das Lagerelement (20,21) vorspannt.

7. Lenkgetriebe nach einem der vorhergehenden Ansprüche, **dadurch gekennzeichnet, dass** das Lenkgetriebegehäuse (8) zur Aufnahme des Druckstücks (19) einen sich in Radialrichtung erstreckenden Dom (220) und fluchtend mit dem Dom (220) eine auf einer dem Dom (220) gegenüberliegenden Innenseite Ausnehmung (24) aufweist, wobei ein erstes Lagerelement (21) des Druckstücks (19) in der Ausnehmung (24) sitzt und ein zweites Lagerelement (20) des Druckstücks (19) in dem Dom (220) aufgenommen ist.

8. Lenkgetriebe nach einem der vorhergehenden Ansprüche, **dadurch gekennzeichnet, dass** das erste und das zweite Lagerelement (20,21) im Wesentlichen kreiszylindrisch sind.

9. Lenkgetriebe nach einem der vorhergehenden Ansprüche, **dadurch gekennzeichnet, dass** eine Gewindespindel (12) eines Schraubgetriebes (10) auf einem ersten Endbereich (15) der Koppelstange (16) ausgebildet ist und in einem, dem ersten Endbereich (15) entlang der Längsachse (100) gegenüberliegenden zweiten Endbereich (18) die Koppelstange (16) mittels des Druckstücks (19) in dem Lenkgetriebegehäuse (8) verschieblich gelagert ist.

10. Lenkgetriebe nach Anspruch 9, **dadurch gekennzeichnet, dass** das Profil der Koppelstange (16) in dem zweiten Endbereich (18) unrund ist und der Durchmesser des Profils kleiner als der Durchmesser des Profils der Koppelstange (16) im übrigen Bereich ist.

11. Lenkgetriebe nach einem der vorhergehenden Ansprüche, **dadurch gekennzeichnet, dass** eines der Lagerelemente (20) auf der koppelstangenahen Seite im Wesentlichen V-förmig korrespondierend zum Profil der Koppelstange (16) ausgebildet ist.

12. Lenkgetriebe nach einem der vorhergehenden Ansprüche, **dadurch gekennzeichnet, dass** das Schraubgetriebe (10) ein Kugelgewindetrieb ist.

13. Steer-by-Wire-Lenksystem (1) für ein Kraftfahrzeug umfassend:
- ein auf die gelenkten Räder (6) wirkendes Lenkgetriebe (7),
- eine Ansteuereinheit,
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit übermittelt,
wobei die Ansteuereinheit das Lenkgetriebe (7) ansteuert, um den Fahrerwunsch in eine Auslenkung der gelenkten Räder (6) zu transformieren, **dadurch gekennzeichnet, dass** das Lenkgetriebe (7) nach einem der vorhergehenden Ansprüche 1 bis 12 ausgebildet ist.

14. Steer-by-Wire-Lenksystem nach Anspruch 13, **dadurch gekennzeichnet, dass** die Koppelstange (16) zur Lenkung der Räder (6) des Kraftfahrzeuges mit Spurstangen (9) verbunden ist.

## Claims

1. A steering gear (7) for a steer-by-wire steering system (1) of a motor vehicle, having a coupling rod which is supported in a steering gear housing (8), wherein the coupling rod (16) can be moved along the longitudinal axis (100), wherein the coupling rod (16) is movably mounted in the steering gear housing (8) along a longitudinal axis (100) by means of a pressure piece (19), **characterized in that** the pressure piece (19) has two bearing elements (20, 21) which are arranged on opposite sides diametrically to the coupling rod (16) in the circumferential direction of the longitudinal axis (100), wherein at least one of the bearing elements (20, 21) has a sliding element (27, 38) on the contact surface (26, 36) between the bearing element (20, 21) and the coupling rod (16).

2. The steering gear as claimed in claim 1, **characterized in that** at least one of the two bearing elements (20, 21) is adapted to a non-circular profile shape of the coupling rod (16) so that the pressure piece (19) forms an anti-rotation protection.

3. The steering gear as claimed in claim 1 or claim 2, **characterized in that** the sliding element (27, 38) surrounds the bearing element (20, 21) over the entire circumference.

4. The steering gear as claimed in one of the preceding claims,
**characterized in that** the sliding element (27, 38) has lubrication pockets (40) for lubricating oil.

5. The steering gear as claimed in one of the preceding claims,
**characterized in that** the sliding element (27, 38) is connected positively to the bearing element (20, 21) via a plug connection.

6. The steering gear as claimed in one of the preceding claims,
**characterized in that** the steering gear comprises an adjusting device (23) which is in abutment with a bearing element (20) of the pressure piece (19), wherein the bearing element (20, 21) is movable by means of the adjusting device (23) in the radial direction (110) toward the coupling rod (16) and the adjusting device (23) pretensions the bearing element (20, 21).

7. The steering gear as claimed in one of the preceding claims,
**characterized in that**, for receiving the pressure piece (19), the steering gear housing (8) has a dome (220) extending in the radial direction and, aligned with the dome (220), a recess (24) on an inner face opposing the dome (220), wherein a first bearing element (21) of the pressure piece (19) is located in the recess (24) and a second bearing element (20) of the pressure piece (19) is received in the dome (220).

8. The steering gear as claimed in one of the preceding claims,
**characterized in that** the first and the second bearing element (20, 21) are substantially circular-cylindrical.

9. The steering gear as claimed in one of the preceding claims,
**characterized in that** a threaded spindle (12) of a helical gearing (10) is configured on a first end region (15) of the coupling rod (16) and the coupling rod (16) is movably mounted in the steering gear housing (8) by means of the pressure piece (19), in a second end region (18) opposing the first end region (15) along the longitudinal axis (100).

10. The steering gear as claimed in claim 9, **characterized in that** the profile of the coupling rod (16) in the second end region (18) is non-circular and the diameter of the profile is smaller than the diameter of the profile of the coupling rod (16) in the remaining region.

11. The steering gear as claimed in one of the preceding claims,
**characterized in that** one of the bearing elements (20) is configured in a substantially V-shaped manner on the side near to the coupling rod, so as to correspond to the profile of the coupling rod (16).

12. The steering gear as claimed in one of the preceding claims,
**characterized in that** the helical gearing (10) is a ball screw drive.

13. A steer-by-wire steering system (1) for a motor vehicle comprising:
- a steering gear (7) acting on the steered wheels (6),
- a control unit,
- a feedback actuator (4) which may be acted upon via a steering input means (3) by a driver with a driver's request for a steering angle and which outputs a feedback signal to the steering input means as a reaction to the driver's request and a driving state of the motor vehicle,
- a device for signal transmission which transmits the driver's request to the control unit,
wherein the control unit controls the steering gear (7) in order to transform the driver's request into a deflection of the steered wheels (6), **characterized in that** the steering gear (7) is configured as claimed in one of the preceding claims 1 to 12.

14. The steer-by-wire steering system as claimed in claim 13, **characterized in that** the coupling rod (16) is connected to tie rods (9) for steering the wheels (6) of the motor vehicle.

## Revendications

1. Mécanisme de direction (7) pour un système de direction à commande par câble (1) d'un véhicule automobile présentant une barre de couplage montée dans un carter de mécanisme de direction (8), la barre de couplage (16) pouvant être déplacée le long de l'axe longitudinal (100), la barre de couplage (16) étant montée dans le carter de mécanisme de direction (8) de manière à pouvoir être déplacée le long d'un axe longitudinal (100) au moyen d'une pièce de pression (19),
**caractérisé en ce que** la pièce de pression (19) présente deux éléments de palier (20, 21) qui sont disposés sur des côtés opposés diamétralement par rapport à la barre de couplage (16) dans la direction circonférentielle de l'axe longitudinal (100), et dans lequel au moins l'un des éléments de palier (20, 21) présente un élément coulissant (27, 38) sur la surface de contact (26, 36) entre l'élément de palier (20, 21) et la barre de couplage (16).

2. Mécanisme de direction selon la revendication 1, **caractérisé en ce qu'**au moins l'un des deux éléments de palier (20, 21) est adapté à une forme de profil ovalisée de la barre de couplage (16) de sorte que la pièce de pression (19) réalise un dispositif anti-torsion.

3. Mécanisme de direction selon la revendication 1 ou la revendication 2, **caractérisé en ce que** l'élément coulissant (27, 38) entoure l'élément de palier (20, 21) sur toute la circonférence.

4. Mécanisme de direction selon l'une quelconque des revendications précédentes, **caractérisé en ce que** l'élément coulissant (27, 38) présente des creux de graissage (40) pour l'huile de graissage.

5. Mécanisme de direction selon l'une quelconque des revendications précédentes, **caractérisé en ce que** l'élément coulissant (27, 38) est relié à l'élément de palier (20, 21) par complémentarité de forme par une connexion enfichable.

6. Mécanisme de direction selon l'une quelconque des revendications précédentes, **caractérisé en ce que** le mécanisme de direction comprend un dispositif de réglage (23) qui est en appui sur un élément de palier (20) de la pièce de pression (19), dans lequel l'élément de palier (20, 21) peut être déplacé au moyen du dispositif de réglage (23) dans la direction radiale (110) sur la barre de couplage (16), et le dispositif de réglage (23) précontraint l'élément de palier (20, 21) .

7. Mécanisme de direction selon l'une quelconque des revendications précédentes, **caractérisé en ce que** pour loger la pièce de pression (19), le carter de mécanisme de direction (8) présente un dôme (220) s'étendant dans la direction radiale, et en alignement avec le dôme (220), un logement (24) sur le côté intérieur opposé au dôme (220), dans lequel un premier élément de palier (21) de la pièce de pression (19) est situé dans l'évidement (24) et un deuxième élément de palier (20) de la pièce de pression (19) est reçu dans le dôme (220) .

8. Mécanisme de direction selon l'une quelconque des revendications précédentes, **caractérisé en ce que** le premier et le deuxième élément de palier (20, 21) sont substantiellement cylindriques circulaires.

9. Mécanisme de direction selon l'une quelconque des revendications précédentes, **caractérisé en ce qu'**une broche filetée (12) d'un engrenage hélicoïdal (10) est réalisé sur une première zone d'extrémité (15) de la barre de couplage (16), et dans une deuxième zone d'extrémité (18), opposée à la première zone d'extrémité (15) le long de l'axe longitudinal (100), la barre de couplage (16) est montée dans le carter de mécanisme de direction (8) de manière à pouvoir être déplacée au moyen de la pièce de pression (19).

10. Mécanisme de direction selon la revendication 9, **caractérisé en ce que** le profil de la barre de couplage (16) est ovalisé dans la deux zone d'extrémité (18), et le diamètre du profil est inférieur au diamètre du profil de la barre de couplage (16) dans la zone restante.

11. Mécanisme de direction selon l'une quelconque des revendications précédentes, **caractérisé en ce qu'**un des éléments de palier (20) est réalisé sur le côté près de la barre de couplage substantiellement en forme de V en correspondance avec le profil de la barre de couplage (16) .

12. Mécanisme de direction selon l'une quelconque des revendications précédentes, **caractérisé en ce que** l'engrenage hélicoïdal (10) est une vis d'entraînement à billes.

13. Système de direction à commande par câble (1) pour un véhicule automobile, comprenant :
- un mécanisme de direction (7) agissant sur les roues directrices (6),
- une unité de pilotage,
- un actionneur à rétroaction (4) qui peut être soumis par l'intermédiaire d'un moyen d'entrée de direction (3) par un conducteur à un souhait de conducteur concernant un angle de direction et délivre un signal de rétroaction au moyen d'entrée de direction en réaction au souhait de conducteur et un état de conduite du véhicule automobile,
- un équipement de transmission de signal qui transmet le souhait de conducteur à l'unité de pilotage,
dans lequel l'unité de pilotage pilote le mécanisme de direction (7) afin de transformer le souhait de conducteur en une déviation des roues directrices (6),
**caractérisé en ce que** le mécanisme de direction (7) est réalisé selon l'une quelconque des revendications précédentes 1 à 12.

14. Système de direction à commande par câble selon la revendication 13, **caractérisé en ce que** la barre de couplage (16) est reliée à des barres d'accouplement (9) servant à diriger les roues (6) du véhicule automobile.
